# EUROPEAN PATENT APPLICATION

(11) **EP 4 782 628 A1**
(43) Date of publication of application: **29.07.2026**
(21) Application number: 23955313.4
(22) Date of filing: 04.12.2023
(51) Int. Cl.: E04H 4/16, F16H 1/20, B60F 3/00

(54) **GEAR TRANSMISSION STRUCTURE OF UNDERWATER ROBOT AND ROBOT**

(30) Priority: 10.10.2023 CN 202322712925 U
(71) Applicant: Shenzhen Seauto Technology Co., Ltd, Shenzhen, Guangdong 518000 (CN)
(72) Inventor: LIU, Qiang, Shaoyang, Hunan 422200 (CN); DENG, Zhuoming, Shenzhen, Guangdong 51800 (CN)
(74) Representative: Valet Patent Services Limited
(86) International application number: PCT/CN2023/136122
(87) International publication number: WO 2025/076956

(57) **Abstract**

The present invention discloses a gear transmission structure for an underwater robot and a robot. The underwater robot includes a robot body, a roller brush, and a walking mechanism. The roller brush is rotatably disposed at a front end and/or a rear end of the robot body. The walking mechanism is disposed on two sides of the robot body. The gear transmission structure is disposed inside the robot body and is configured to drive the roller brush and the walking mechanism to move. The gear transmission structure includes a fixed shaft and an intermediate transmission gear. The fixed shaft is transversely disposed at a front end of the robot body. The intermediate transmission gear is sleeved on the fixed shaft. A first bearing is sleeved inside the intermediate transmission gear. The fixed shaft is in interference fit with the first bearing. The present invention is configured to avoid wear of the gear and a bushing in rotating cooperation with the gear due to long-term use, simultaneously reduces noise and transmission resistance, thereby leading to improved product lifespan and endurance.

## Description

### TECHNICAL FIELD

The present invention relates to the technical field of robots, and in particular, to a gear transmission structure for an underwater robot and a robot.

### BACKGROUND

With the development of the social economy, the demand for swimming pool cleaning is increasing. Most swimming pool cleaning robots currently on the market transmit the torque of the drive motor to the walking wheels and the roller brush mechanism through gears. The bushings cooperating with the gear rotation are generally engineering plastic.

During the use of the swimming pool cleaning robot for pool cleaning, the gears and the bushings in rotating cooperation with the gears will wear out after long-term use, leading to a gradual increase in transmission noise and resistance, thereby affecting the overall lifespan of the product, and requiring regular replacement of the worn gear bushings.

### SUMMARY

A primary objective of the present invention is to provide a gear transmission structure for an underwater robot and a robot, aiming to avoid wear of the gear and a bushing in rotating cooperation with the gear due to long-term use, simultaneously reduce noise and transmission resistance, and thereby lead to improved product lifespan and endurance.

To achieve the aforementioned objective, provided in the present invention is a gear transmission structure for an underwater robot, where the underwater robot includes a robot body, a roller brush, and a walking mechanism, the roller brush is rotatably disposed at a front end and/or a rear end of the robot body, the walking mechanism is disposed on two sides of the robot body, the gear transmission structure is disposed inside the robot body and is configured to drive the roller brush and the walking mechanism to move;
the gear transmission structure includes a fixed shaft and an intermediate transmission gear, the fixed shaft is transversely disposed at a front end of the robot body, the intermediate transmission gear is sleeved on the fixed shaft, a first bearing is sleeved inside the intermediate transmission gear, and the fixed shaft is in interference fit with the first bearing.

Preferably, limit retaining rings are disposed on two sides of the intermediate transmission gear outside the first bearing.

Preferably, the limit retaining ring includes an annular ring body, a circular protrusion is peripherally disposed near an outer edge of the annular ring body, and circular grooves corresponding to the circular protrusion are disposed on two sides of the first bearing.

Preferably, the underwater robot further includes a motor, the gear transmission structure further includes a drive gear, the drive gear includes a main gear and an auxiliary gear fixedly connected to the main gear, the main gear is connected to an output shaft of the motor, a diameter of the main gear is greater than a diameter of the auxiliary gear, the main gear is meshed with the intermediate transmission gear, the walking mechanism includes a front wheel disposed at a front end of the robot body, the front wheel is provided with an internal ring gear portion, and the auxiliary gear is meshed with the internal ring gear portion.

Preferably, one or more second bearings are sleeved inside the front wheel, and the fixed shaft passes through the first bearing and is then inserted into the second bearing.

Preferably, two second bearings are provided.

Preferably, a gland is disposed on an outer side of the front wheel outside the second bearing.

Preferably, the walking mechanism further includes a rear wheel disposed at a rear end of the robot body, and a track sleeved on the front wheel and the rear wheel.

Preferably, the gear transmission structure further includes a roller brush gear, the roller brush gear is meshed with the intermediate transmission gear, and the roller brush is connected to the roller brush gear via a rotating shaft.

To achieve the aforementioned objective, proposed in the present invention is further a robot, including the aforementioned geat transmission structure for an underwater robot.

The beneficial effects of the gear transmission structure for the underwater robot and the robot of the present invention are as follows:

With the above technical solution of the present invention, the underwater robot includes a robot body, a roller brush, and a walking mechanism, the roller brush is rotatably disposed at a front end and/or a rear end of the robot body, the walking mechanism is disposed on two sides of the robot body, the gear transmission structure is disposed inside the robot body and is configured to drive the roller brush and the walking mechanism to move; the gear transmission structure includes a fixed shaft and an intermediate transmission gear, the fixed shaft is transversely disposed at a front end of the robot body, the intermediate transmission gear is sleeved on the fixed shaft, a first bearing is sleeved inside the intermediate transmission gear, and the fixed shaft is in interference fit with the first bearing, which is configured to avoid wear of the gear and a bushing in rotating cooperation with the gear due to long-term use, simultaneously reduces noise and transmission resistance, thereby leading to improved product lifespan and endurance.

### BRIEF DESCRIPTION OF THE DRAWINGS

In order to illustrate the technical solutions of the embodiments of the present invention or of the prior art more clearly, the following drawings are briefly described as required in the context of the embodiments or the prior art. Obviously, the following drawings illustrate only some of the embodiments of the present invention. Other relevant drawings may be obtained on the basis of the structures shown by these drawings without any creative effort by those skilled in the art.
FIG. 1 is a schematic exploded view of a preferred embodiment of the gear transmission structure for the underwater robot of the present invention;
FIG. 2 is a schematic overall structural view of the preferred embodiment of the gear transmission structure for the underwater robot of the present invention;
FIG. 3 is a schematic structural view of the limit retaining ring;
FIG. 4 is a schematic structural view of the first bearing;
FIG. 5 is a schematic structural view of the front wheel;
FIG. 6 is a schematic structural view of the gear transmission structure;
FIG. 7 is a schematic view showing the cooperation between the gear transmission structure and the robot body.

### Reference Numerals:

robot body 10;
roller brush 20;
walking mechanism 30:
front wheel 301; internal ring gear portion 302; second bearing 303; gland 304; rear wheel 305; track 306;
gear transmission structure 40:
fixed shaft 401; intermediate transmission gear 402; first bearing 403; limit retaining ring 404; ring body 405; circular protrusion 406; circular groove 407; drive gear 408; main gear 409; auxiliary gear 410; roller brush gear 411.

The achievement of the objectives, functional features, and advantages of the present invention will be further described in conjunction with embodiments and with reference to the accompanying drawings.

### DETAILED DESCRIPTION

The technical solutions in the embodiments of the present invention are clearly and completely described and discussed below in conjunction with the attached drawings of the embodiments of the present invention. Obviously, the embodiments described herein are only some of the embodiments of the present invention but not all of them. Based on the embodiments in the present invention, all other embodiments obtained by those skilled in the art without creative efforts fall within the scope of protection of the present invention.

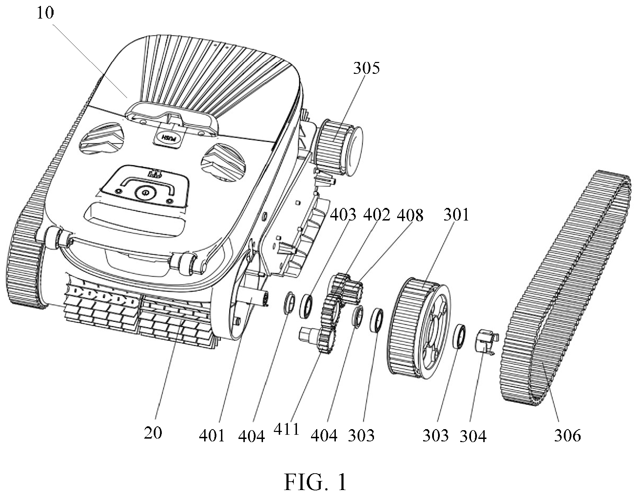

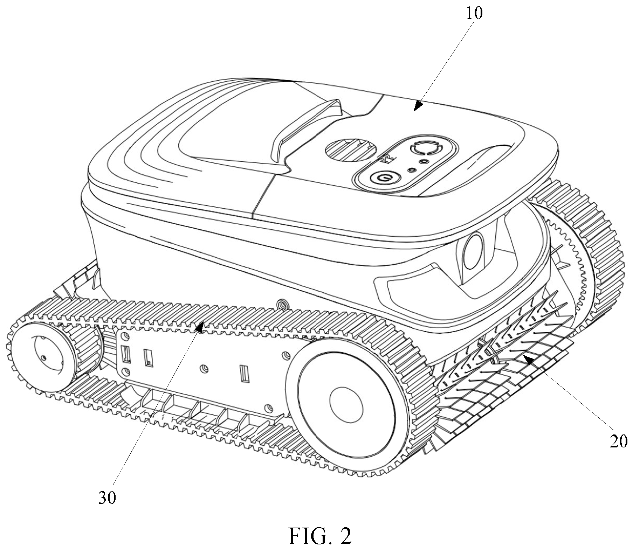

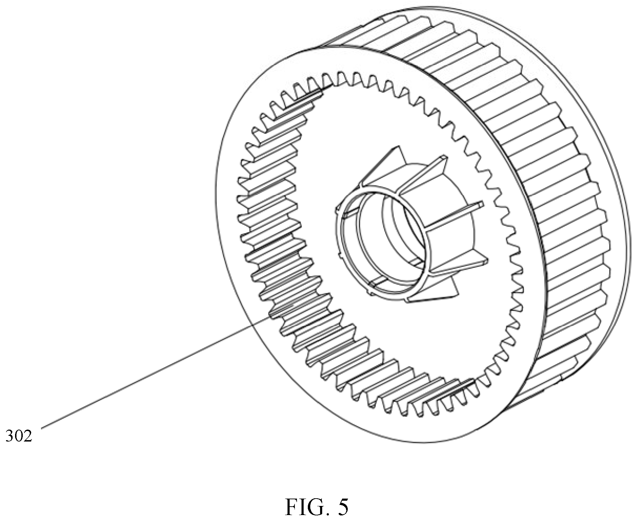

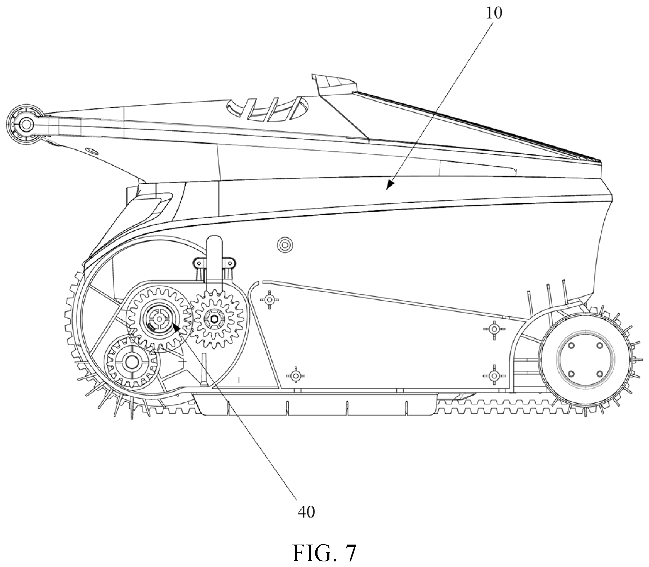

Please refer to FIGS. 1 to 7. The present invention proposes a gear transmission structure for an underwater robot. The technical solution adopted in the present invention mainly involves arranging bearings on the intermediate transmission gear 402 and the front wheel 301 to avoid wear affecting product lifespan caused by long-term use of the gear and a bushing in rotating cooperation with the gear. Meanwhile, the bearings used in the present invention have a better silencing effect, smaller transmission resistance, and are more energy-efficient, which may effectively improve endurance.

Specifically, in a preferred embodiment of the gear transmission structure for the underwater robot of the present invention, the underwater robot includes a robot body 10, a roller brush 20, and a walking mechanism 30. The roller brush 20 is rotatably disposed at a front end and/or a rear end of the robot body 10. The walking mechanism 30 is disposed on two sides of the robot body 10. The gear transmission structure 40 is disposed inside the robot body 10 and is configured to drive the roller brush 20 and the walking mechanism 30 to move.

The gear transmission structure 40 includes a fixed shaft 401 and an intermediate transmission gear 402. The fixed shaft 401 is transversely disposed at the front end of the robot body 10. The intermediate transmission gear 402 is sleeved on the fixed shaft 401. A first bearing 403 is sleeved inside the intermediate transmission gear 402. The fixed shaft 401 is in interference fit with the first bearing 403.

A bearing is an important component in mechanical equipment. Its main function is to support mechanical rotating bodies, reduce the friction coefficient during movement, and ensure their rotational accuracy.

In the present embodiment, by sleeving the first bearing 403 inside the intermediate transmission gear 402 and having the fixed shaft 401 pass through the first bearing 403, wear of the fixed shaft 401 and the intermediate transmission gear 402 can be avoided, their service life can be improved, and noise and transmission resistance can be reduced, thereby leading to improved endurance.

Furthermore, in the present embodiment, limit retaining rings 404 are disposed on two sides of the intermediate transmission gear 402 outside the first bearing 403.

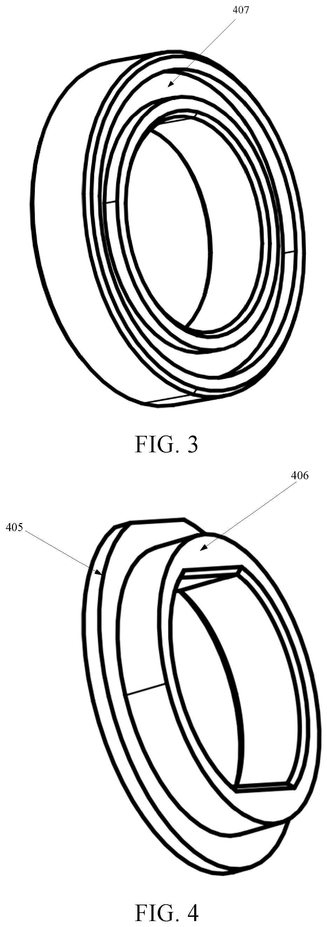

As shown in FIG. 3 and FIG. 4, the limit retaining ring 404 includes an annular ring body 405. A circular protrusion 406 is circumferentially disposed near an outer edge of the annular ring body 405. Circular grooves 407 corresponding to the circular protrusion 406 are disposed on two sides of the first bearing 403.

During assembly, the circular protrusion 406 is embedded in the corresponding groove, so that the limit retaining ring 404 limits the position of the first bearing 403, preventing the first bearing 403 from shaking or dislocating during operation, thereby improving movement stability.

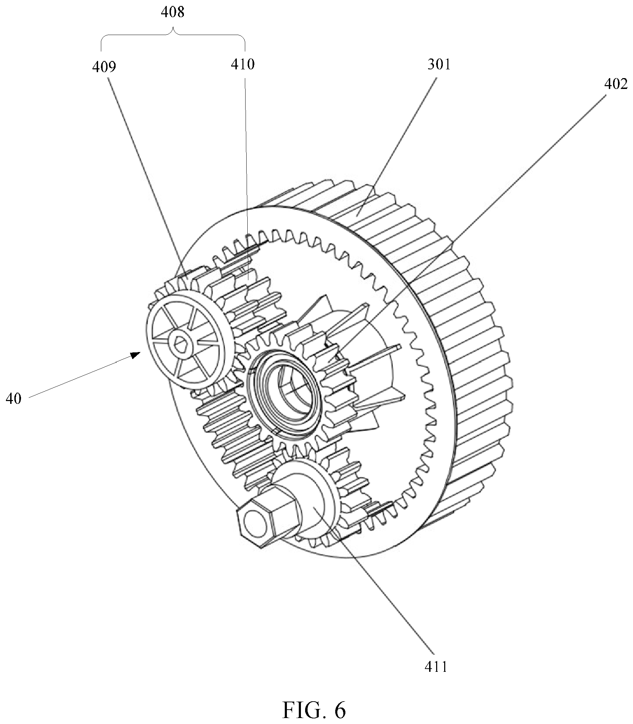

Furthermore, in the present embodiment, the underwater robot further includes a motor (not shown in the figures). The gear transmission structure 40 further includes a drive gear 408. The drive gear 408 includes a main gear 409 and an auxiliary gear 410 fixedly connected to the main gear 409. The main gear 409 is connected to an output shaft of the motor. A diameter of the main gear 409 is greater than a diameter of the auxiliary gear 410. The main gear 409 is meshed with the intermediate transmission gear 402. The walking mechanism 30 includes a front wheel 301 disposed at the front end of the robot body 10. As shown in FIG. 6, the front wheel 301 is provided with an internal ring gear portion 302. The auxiliary gear 410 is meshed with the internal ring gear portion 302.

In the present embodiment, the diameter of the main gear 409 is greater than the diameter of the auxiliary gear 410, thereby increasing the output torque of the motor and further improving the trafficability of the robot body 10.

Furthermore, in the present embodiment, one or more second bearings 303 are sleeved inside the front wheel 301, and the fixed shaft 401 passes through the first bearing 403 and is then inserted into the second bearing 303.

During specific implementation, to improve the movement stability of the front wheel 301, the number of the second bearing 303 can be set according to the axial width of the front wheel 301. For example, when the axial width of the front wheel 301 is relatively small, one second bearing 303 can be selected. When the circumferential width of the front wheel 301 is relatively large, two second bearings 303 may be selected and arranged side by side inside the front wheel 301.

As a preferred implementation, in the present embodiment, two second bearings 303 are provided.

Furthermore, in this embodiment, a gland 304 is disposed on an outer side of the front wheel 301 outside the second bearing 303. The gland 304 is configured to prevent the second bearing 303 from dislocating, thereby improving assembly and operational stability.

In the present embodiment, the walking mechanism 30 further includes a rear wheel 305 disposed at a rear end of the robot body 10, and a track 306 sleeved on the front wheel 301 and the rear wheel 305.

The track 306 is driven to move synchronously in response to the front wheel 301 and the rear wheel 305 moving synchronously, thereby driving the robot body 10 to move forward or backward.

Furthermore, in the present embodiment, the gear transmission structure 40 further includes a roller brush gear 411. The roller brush gear 411 is meshed with the intermediate transmission gear 402. The roller brush 20 is connected to the roller brush gear 411 via a rotating shaft. The rotating shaft is transversely disposed at the front end of the robot body 10 and is arranged parallel to the fixed shaft 401. The roller brush 20 is fixedly disposed on the rotating shaft. The roller brush 20 is driven to rotate to clean a swimming pool in response to the intermediate transmission gear 402 rotating.

It should be noted that, in the present embodiment, the diameters of the roller brush gear 411, the intermediate transmission gear 402, and the main gear 409 can be designed to be the same, while the diameter of the main gear 409 is greater than the diameter of the auxiliary gear 410. Therefore, the roller brush 20 rotates multiple times to clean the swimming pool in response to the front wheel 301 meshed with the auxiliary gear 410 rotating one circle, thereby improving swimming pool cleaning efficiency.

The beneficial effects of the gear transmission structure for the underwater robot of the present invention are as follows:

With the above technical solution of the present invention, the underwater robot includes a robot body, a roller brush, and a walking mechanism, the roller brush is rotatably disposed at a front end and/or a rear end of the robot body, the walking mechanism is disposed on two sides of the robot body, the gear transmission structure is disposed inside the robot body and is configured to drive the roller brush and the walking mechanism to move; the gear transmission structure includes a fixed shaft and an intermediate transmission gear, the fixed shaft is transversely disposed at a front end of the robot body, the intermediate transmission gear is sleeved on the fixed shaft, a first bearing is sleeved inside the intermediate transmission gear, and the fixed shaft is in interference fit with the first bearing, which is configured to avoid wear of the gear and a bushing in rotating cooperation with the gear due to long-term use, simultaneously reduces noise and transmission resistance, thereby leading to improved product lifespan and endurance.

To achieve the above objective, the present invention further proposes a robot. The robot includes the gear transmission structure for the underwater robot as described in the above embodiments. The structure and working principle of the gear transmission structure for the underwater robot have been elaborated in detail above and will not be repeated here.

The above descriptions are only preferred embodiments of the present invention and are not intended to limit the patent scope of the present invention. Any equivalent structural transformations made under the concept of the present invention by utilizing the content of the description and the accompanying drawings of the present invention, or any direct/indirect application in other related technical fields, are included within the patent protection scope of the present invention.

## Claims

1. A gear transmission structure for an underwater robot, wherein the underwater robot comprises a robot body, a roller brush, and a walking mechanism, the roller brush is rotatably disposed at a front end and/or a rear end of the robot body, the walking mechanism is disposed on two sides of the robot body, the gear transmission structure is disposed inside the robot body and is configured to drive the roller brush and the walking mechanism to move the gear transmission structure comprises a fixed shaft and an intermediate transmission gear, the fixed shaft is transversely disposed at a front end of the robot body, the intermediate transmission gear is sleeved on the fixed shaft, a first bearing is sleeved inside the intermediate transmission gear, and the fixed shaft is in interference fit with the first bearing.

2. The gear transmission structure for the underwater robot according to claim 1, wherein limit retaining rings are disposed on two sides of the intermediate transmission gear outside the first bearing.

3. The gear transmission structure for the underwater robot according to claim 2, wherein the limit retaining ring comprises an annular ring body, a circular protrusion is peripherally disposed near an outer edge of the annular ring body, and circular grooves corresponding to the circular protrusion are disposed on two sides of the first bearing.

4. The gear transmission structure for the underwater robot according to claim 1, wherein the underwater robot further comprises a motor, the gear transmission structure further comprises a drive gear, the drive gear comprises a main gear and an auxiliary gear fixedly connected to the main gear, the main gear is connected to an output shaft of the motor, a diameter of the main gear is greater than a diameter of the auxiliary gear, the main gear is meshed with the intermediate transmission gear, the walking mechanism comprises a front wheel disposed at a front end of the robot body, the front wheel is provided with an internal ring gear portion, and the auxiliary gear is meshed with the internal ring gear portion.

5. The gear transmission structure for the underwater robot according to claim 4, wherein one or more second bearings are sleeved inside the front wheel, and the fixed shaft passes through the first bearing and is then inserted into the second bearing.

6. The gear transmission structure for the underwater robot according to claim 5, wherein two second bearings are provided.

7. The gear transmission structure for the underwater robot according to claim 6, wherein a gland is disposed on an outer side of the front wheel outside the second bearing.

8. The gear transmission structure for the underwater robot according to claim 4, wherein the walking mechanism further comprises a rear wheel disposed at a rear end of the robot body, and a track sleeved on the front wheel and the rear wheel.

9. The gear transmission structure for the underwater robot according to claim 1, wherein the gear transmission structure further comprises a roller brush gear, the roller brush gear is meshed with the intermediate transmission gear, and the roller brush is connected to the roller brush gear via a rotating shaft.10. A robot, comprising the gear transmission structure for the underwater robot according to any one of claims 1 to 9.
